# FASCICULE DE BREVET EUROPEEN

(11) **EP 2 044 679 B1**
(45) Date de publication et mention de la délivrance du brevet: **16.05.2018**
(21) Numéro de dépôt: 07823331.9
(22) Date de dépôt: 24.07.2007
(51) Int. Cl.: H02M 3/156

(54) **CIRCUIT ÉLECTRIQUE D'ALIMENTATION D'UN MODULE DE COMMANDE COMPORTANT DEUX MODES D'ALIMENTATION**
ELEKTRISCHE SCHALTUNG ZUM ANTREIBEN EINES STEUERMODULS MIT ZWEI ANTRIEBSMODI
ELECTRIC CIRCUIT FOR POWERING A CONTROL MODULE COMPRISING TWO POWERING MODES

(30) Priorité: 24.07.2006 FR 0606748
(43) Date de publication de la demande: 08.04.2009
(73) Titulaire: Valeo Systèmes de Contrôle Moteur, 95892 Cergy Pontoise (FR)
(72) Inventeur: CANS, Renaud, F-75116 Paris (FR); SUZZONI, Etienne, F-95490 Vaureal (FR)
(74) Mandataire: Rolland, Jean-Christophe
(86) Numéro de dépôt international: PCT/FR2007/001273
(87) Numéro de publication internationale: WO 2008/012430

(56) Documents cités:
- EP-A- 1 557 561
- US-A1- 5 179 508
- US-A1- 2004 113 600
- US-A1- 2004 257 057

## Description

La présente invention concerne un circuit électrique d'alimentation d'un module de commande d'un moteur thermique comme ceux utilisés pour la motorisation des véhicules automobiles.

### ARRIERE PLAN DE L'INVENTION

Un tel module de commande, généralement nommé ECU (de l'anglais "Engine Control Unit", unité de commande moteur), comprend un noyau numérique tel qu'un microprocesseur agencé pour gérer l'injection du carburant, le pilotage du papillon des gaz...

Le circuit électrique d'alimentation du module de commande comporte généralement une batterie reliée par une branche principale à un organe de régulation de tension intégré au module de commande pour alimenter celui-ci. La batterie est généralement celle du véhicule automobile, également utilisée pour alimenter d'autres composants du moteur comme le démarreur. La batterie délivre généralement une tension de 12 volts tandis que l'organe de régulation de tension délivre, à partir de cette tension de 12 volts, une tension de 5 volts et une tension de 3,3 volts pour alimenter le module de commande. Pendant la phase de démarrage, la consommation du démarreur entraîne une chute de la tension disponible à la batterie et rend nécessaire de disposer dans le circuit d'alimentation d'une capacité suffisante pour restituer l'énergie permettant d'alimenter le module de commande. Il a également été envisagé d'élever la tension fournie par la batterie avant son entrée dans l'organe de régulation de tension. Le document US 5.179.508 montre un circuit électrique d'alimentation avec ces caractéristiques techniques. Il existe des circuits intégrés dédiés pouvant réaliser cette fonction. Ces circuits intégrés sont toutefois coûteux sans être suffisamment robustes pour pouvoir fonctionner dans le compartiment moteur d'un véhicule automobile. On aurait également pu imaginer de programmer le module de commande pour qu'il réalise lui-même cette fonction. Cependant, au moment du démarrage, la charge de calcul du module de commande est importante au point que le module de commande ne pourrait gérer efficacement cette fonction d'élévation de tension.

### OBJET DE L'INVENTION

Il serait donc intéressant de disposer d'un moyen permettant d'alimenter un module de commande de moteur thermique lorsque la tension délivrée par la batterie est relativement faible.

### RESUME DE L'INVENTION

A cet effet, on prévoit, selon l'invention, un circuit électrique d'alimentation d'un module de commande, comportant une batterie reliée par une branche principale à un organe de régulation de tension associé au module de commande pour alimenter le module de commande, le circuit d'alimentation comprenant une branche secondaire, en parallèle de la branche principale, qui est reliée à un convertisseur élévateur de tension régulé par un signal et relié à un organe de détermination du signal de régulation par comparaison d'une image d'une tension de sortie du convertisseur élévateur de tension à un signal de référence généré à partir d'une tension de sortie de l'organe de régulation de tension, et la branche principale étant montée en by-pass de la branche secondaire lorsque la batterie délivre une tension supérieure à un seuil de fonctionnement nominal prédéterminé.

Ainsi, lorsque la tension délivrée par la batterie est inférieure au seuil de fonctionnement nominal prédéterminé, la batterie alimente l'organe de régulation de tension par la branche secondaire dans laquelle la tension est élevée pour permettre l'alimentation de l'organe de régulation de tension. Lorsque la tension délivrée par la batterie est supérieure au seuil de fonctionnement nominal prédéterminé, la batterie alimente directement l'organe de régulation de tension via la branche principale. En application à un moteur thermique de véhicule automobile, la branche secondaire permet l'alimentation de l'organe de régulation lors des phases de démarrage tandis que la branche principale assure l'alimentation de l'organe de régulation en dehors de la phase de démarrage.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue schématique du circuit électrique d'alimentation conforme à l'invention,
- la figure 2 est un diagramme représentant la tension en fonction du temps et illustrant la phase de détermination des impulsions.

### DESCRIPTION DETAILLEE DE L'INVENTION

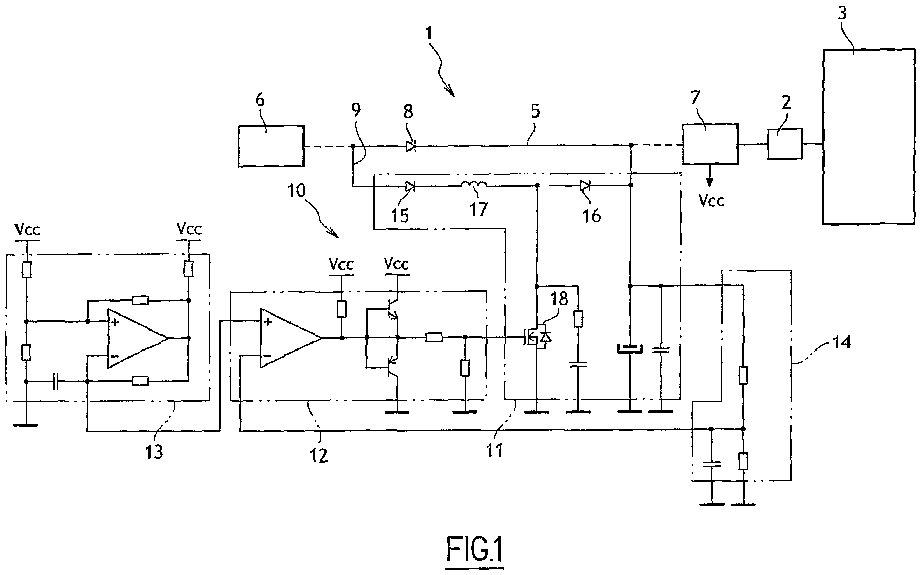

Le circuit électrique d'alimentation, qui est ici décrit et généralement désigné en 1 à la figure 1, est destiné à alimenter un module de commande 2 d'un moteur thermique 3 de véhicule automobile. Le module de commande 2 est connu en lui-même.

Le circuit électrique 1 comprend une branche principale 5 reliant une batterie 6 à un organe de régulation de tension 7 intégré au module de commande 2 pour alimenter celui-ci. La batterie est ici la batterie de 12 volts du véhicule automobile et est reliée à d'autres éléments du véhicule automobile et notamment au démarreur du moteur thermique 3. L'organe de régulation de tension 7 est connu en lui-même et comprend ici un régulateur linéaire agencé pour fournir notamment une tension de 5 volts au module de commande 2.

La branche principale 5 comprend une diode 8 passante de la batterie 6 vers l'organe de régulation de tension 7.

Le circuit électrique 1 comprend en outre une branche secondaire 9 s'étendant en parallèle de la branche principale 5 et raccordée à celle-ci de part et d'autre de la diode 8. La branche secondaire 9 est reliée à un convertisseur élévateur de tension, généralement désigné en 10, comportant un circuit de commutation de puissance 11 fonctionnant à partir d'impulsions produites par un circuit générateur d'impulsions 12 fonctionnant à partir d'un signal triangulaire, ici centré, produit par un circuit générateur de signal triangulaire 13 et à partir d'une tension issue d'un circuit diviseur de tension 14.

Le circuit de commutation de puissance 11 comprend deux diodes 15, 16 disposées en série sur la branche secondaire 9 et passante de la batterie 6 vers le module de commande 2, et une inductance 17 disposée entre les diodes 15, 16. Le circuit de commutation de puissance 11 comporte de façon connue en elle-même un transistor 18 N MOSFET dont la source et le drain sont raccordés à la masse et à la branche secondaire 9 entre la diode 16 et l'inductance 17, et la grille est raccordée à la sortie du circuit générateur d'impulsions 12.

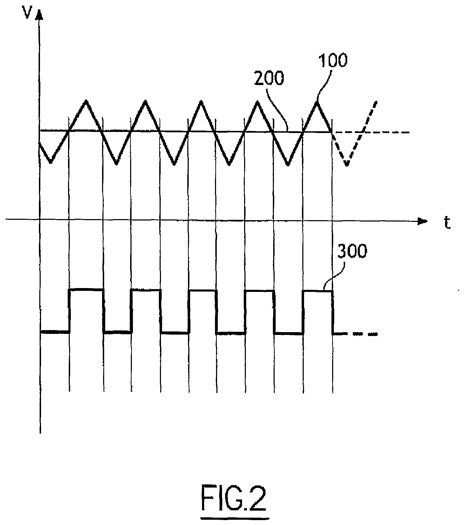

Le circuit générateur de signal triangulaire 13 est réalisé ici de façon connue en soi au moyen d'un comparateur. Le circuit générateur de signal triangulaire 13 reçoit en entrée la tension issue de l'organe de régulation de tension 7 et délivre en sortie un signal triangulaire représenté en 100 sur la figure 2. Les composants du circuit générateur de signal triangulaire sont choisis pour que le signal triangulaire 100 ait une tension minimale d'environ 2,4 volts et une tension maximale d'environ 3,7 volts pour une tension de sortie Vcc de l'organe de régulation de tension 7 comprise entre 4,9 volts et 5,1 volts environ.

Le circuit générateur d'impulsions 12 (connu en lui-même, circuit de type PWM "Pulse Width Modulation", modulation de largeur d'impulsion) comprend un comparateur recevant en entrée positive le signal triangulaire 100 et en entrée négative la tension issue du circuit diviseur 14 et représentée en 200 sur la figure 2. L'amplificateur compare les deux signaux et délivre en sortie, par l'intermédiaire d'un montage à transistors, des impulsions 300 qui alimentent la grille du transistor 18.

Le circuit diviseur 14 est alimenté par la tension de sortie du circuit de commutation de puissance 11 et opère une division de la tension de sortie du circuit de commutation de puissance 11 pour fournir la tension 200 à l'entrée négative de l'amplificateur du circuit générateur d'impulsions 12. La tension en sortie du diviseur est donc une image de la tension de sortie du convertisseur élévateur de tension 10, résultant d'un traitement de cette tension.

Les composants et le montage du convertisseur élévateur de tension 10 sont déterminés pour permettre la production d'une tension minimale de sortie d'environ 6 volts pour une tension d'entrée minimum de 4,5 volts. Le circuit diviseur 14 est agencé de façon connue en soi pour réaliser une division telle que la tension de sortie du circuit diviseur 14 vaut 3,7 volts lorsque la tension de sortie du circuit de commutation de puissance 11 vaut 7,1 volts.

Les composants des branches principale 5 et secondaire 9 sont choisis de telle manière que la branche principale 5 soit en by-pass de la branche secondaire 9 lorsque la tension délivrée par la batterie 6 est supérieure à un seuil de fonctionnement nominal de 7,7 volts environ. Le module de commande 2 est alors alimenté par la branche principale 5. En dessous du seuil de fonctionnement nominal, le module de commande 2 est alimenté par la branche secondaire 9. La tension est alors élevée de façon analogique pour atteindre une valeur suffisante pour alimenter le module de commande 2 via l'organe de régulation 7.

Bien entendu, l'invention n'est pas limitée au mode de réalisation décrit et on peut y apporter des variantes de réalisation sans sortir du cadre de l'invention tel que défini par les revendications.

En particulier, bien que le signal de référence ait été décrit comme un signal triangulaire centré, le signal de référence peut avoir d'autres formes et être notamment tout signal comportant une succession de motifs, de périodes variables ou constantes, ayant chacun une portion montante et une portion descendante dont l'une au moins est globalement inclinée, c'est-à-dire un signal comportant une succession de rampes tel qu'un signal triangulaire non centré ou à dents de scie, ou à portions curvilignes comme un signal sinusoïdal. Le signal de référence peut en outre avoir une amplitude et/ou une période variables.

Les valeurs numériques ne sont indiquées qu'à titre d'exemple et peuvent être modifiées notamment en fonction des composants à alimenter, de la batterie utilisée, de l'application envisagée...

## Revendications

1. Circuit électrique d'alimentation (1) d'un module de commande (2), comportant une batterie (6) reliée par une branche principale (5) à un organe de régulation de tension (7) associé au module de commande pour alimenter le module de commande, **caractérisé en ce que** le circuit d'alimentation comprend une branche secondaire (9), en parallèle de la branche principale, qui est reliée à un convertisseur élévateur de tension (10) régulé par un signal et relié à un organe de détermination (12) du signal de régulation par comparaison d'une image d'une tension de sortie du convertisseur élévateur de tension avec un signal de référence à partir d'une tension de sortie de l'organe de régulation de tension, et **en ce que** la branche principale est montée en by-pass de la branche secondaire lorsque la batterie délivre une tension supérieure à un seuil de fonctionnement nominal prédéterminé.

2. Circuit selon la revendication 1, dans lequel l'image de la tension de sortie du convertisseur élévateur (10) est obtenue par division de cette tension.

3. Circuit selon la revendication 1 ou la revendication 2, dans lequel le signal de régulation comprend des impulsions et le signal de référence est un signal comportant une succession de motifs ayant chacun une portion montante et une portion descendante dont au moins l'une est globalement inclinée.

4. Circuit selon la revendication 3, dans lequel le signal de référence est un signal triangulaire.

5. Circuit selon la revendication 4, dans lequel, pour une tension de sortie de l'organe de régulation de tension (7) comprise entre 4,9 volts et 5,1 volts environ, le signal triangulaire a une valeur minimale de 2,4 volts environ et une valeur maximale de 3,7 volts environ.

6. Circuit selon la revendication 1, dans lequel, pour une tension nominale de batterie (6) de 12 volts, le seuil de fonctionnement nominal est égal à 7,7 volts environ.

7. Circuit selon la revendication 1, dans lequel le convertisseur élévateur de tension (10) est agencé pour fournir une tension minimale de sortie de 6 volts environ lorsque la batterie délivre une tension de 4,5 volts environ.

## Patentansprüche

1. Elektrische Schaltung zum Antreiben (1) eines Steuermoduls (2), die eine Batterie (6) aufweist, die durch einen Hauptzweig (5) mit einem Element zur Spannungsregelung (7) verbunden ist, das mit dem Steuermodul in Verbindung steht, um das Steuermodul anzutreiben, **dadurch gekennzeichnet, dass** die Schaltung zum Antreiben parallel zu dem Hauptzweig einen Sekundärzweig (9) umfasst, der mit einem Aufwärtsspannungswandler (10) verbunden ist, der von einem Signal geregelt wird und mit einem Element zur Feststellung (12) des Regelsignals durch Abgleich eines Bildes einer Ausgangsspannung des Aufwärtsspannungswandlers mit einem Referenzsignal anhand einer Ausgangsspannung des Elements zur Spannungsregelung verbunden ist, und dadurch, dass der Hauptzweig als Bypass des Sekundärzweigs geschaltet ist, wenn die Batterie eine Spannung liefert, die höher als die vorbestimmte Nennfunktionsschwelle ist.

2. Schaltung nach Anspruch 1, wobei das Bild der Ausgangsspannung des Aufwärtswandlers (10) durch Teilung dieser Spannung erhalten wird.

3. Schaltung nach Anspruch 1 oder 2, wobei das Regelsignal Impulse umfasst und das Referenzsignal ein Signal ist, das eine Abfolge von Motiven aufweist, die jeweils einen aufsteigenden Abschnitt und einen absteigenden Abschnitt aufweisen, wovon mindestens einer allgemein geneigt ist.

4. System nach Anspruch 3, wobei das Referenzsignal ein Dreiecksignal ist.

5. Schaltung nach Anspruch 4, wobei für eine Ausgangsspannung des Elements zur Spannungsregelung (7) zwischen ungefähr 4,9 Volt und 5,1 Volt das Dreiecksignal einen Mindestwert von ungefähr 2,4 Volt und einen Höchstwert von ungefähr 3,7 Volt aufweist.

6. Schaltung nach Anspruch 1, wobei für eine Nennspannung einer Batterie (6) von 12 Volt die Nennfunktionsschwelle ungefähr gleich 7,7 Volt ist.

7. Schaltung nach Anspruch 1, wobei der Spannungsaufwärtswandler (10) angeordnet ist, eine Mindest-Ausgangsspannung von ungefähr 6 Volt zu liefern, wenn die Batterie eine Spannung von ungefähr 4,5 Volt liefert.

## Claims

1. Electrical power supply circuit (1) for a control module (2), comprising a battery (6) connected via a main branch (5) to a voltage regulation device (7) associated with the control module for supplying power to the control module, **characterized in that** the power supply circuit comprises a secondary branch (9), in parallel with the main branch, which is connected to a step-up voltage converter (10) regulated by a signal and connected to a device (12) for determining the regulation signal by comparison of an image of an output voltage from the step-up voltage converter with a reference signal based on an output voltage from the voltage regulation device, and **in that** the main branch is configured in bypass mode for the secondary branch when the battery delivers a voltage higher than a predetermined nominal operating threshold.

2. Circuit according to Claim 1, in which the image of the output voltage from the step-up voltage converter (10) is obtained by division of this voltage.

3. Circuit according to either of Claims 1 and 2, in which the regulation signal comprises pulses and the reference signal is a signal comprising a succession of patterns each having a rising portion and a falling portion at least one of which has an overall inclination.

4. Circuit according to Claim 3, in which the reference signal is a triangular signal.

5. Circuit according to Claim 4, in which, for an output voltage from the voltage regulation device (7) in the range between around 4.9 volts and 5.1 volts, the triangular signal has a minimum value of around 2.4 volts and a maximum value of around 3.7 volts.

6. Circuit according to Claim 1, in which, for a nominal battery (6) voltage of 12 volts, the nominal operating threshold is equal to around 7.7 volts.

7. Circuit according to Claim 1, in which the step-up voltage converter (10) is configured to supply a minimum output voltage of around 6 volts when the battery delivers a voltage of around 4.5 volts.
